(19) Europäisches Patentamt
European Patent Office
Office européen des brevets

(11) EP 0 604 282 B1

## (12) FASCICULE DE BREVET EUROPEEN

(45) Date de publication et mention
de la délivrance du brevet:
**24.06.1998 Bulletin 1998/26**

(51) Int Cl.⁶: **H04N 5/33**, H04N 5/217

(21) Numéro de dépôt: **93403073.5**

(22) Date de dépôt: **17.12.1993**

(54) **Détecteur d'image thermique muni de moyens d'élimination du motif de bruit fixe**

Wärmebilddetektor mit Vorrichtung zur Beseitigung von statischen Störungen

Thermal image detector with means for eliminating fixed pattern noise

(84) Etats contractants désignés:
**AT BE CH DE ES FR GB IT LI NL**

(30) Priorité: **22.12.1992 FR 9215479**

(43) Date de publication de la demande:
**29.06.1994 Bulletin 1994/26**

(73) Titulaire: **THOMSON-CSF SEMICONDUCTEURS SPECIFIQUES**
**75008 Paris (FR)**

(72) Inventeur: **Dautriche, Pierre**
**F-92402 Courbevoie Cedex (FR)**

(74) Mandataire: **Guérin, Michel et al**
**THOMSON-CSF-S.C.P.I.,**
**13, Avenue du Président**
**Salvador Allende**
**94117 Arcueil Cédex (FR)**

(56) Documents cités:
DE-A- 2 842 980          US-A- 4 072 863
US-A- 4 115 692

- **PATENT ABSTRACTS OF JAPAN vol. 16, no. 170 (E-1194)23 Avril 1992 & JP-A-40 014 967 (HITACHI) 20 Janvier 1992**

EP 0 604 282 B1

## Description

L'invention concerne les détecteurs d'images thermiques, notamment les détecteurs pyroélectriques, destinés à produire une image d'une scène en lumière infra-rouge, et tout particulièrement ceux qui fonctionnent à température ambiante.

Les détecteurs pyroélectriques fonctionnent de la manière suivante : ils absorbent le rayonnement infrarouge pour échauffer une couche pyroélectrique, c'est-à-dire une couche ayant la propriété d'engendrer des charges de surface en fonction de la température. Les charges engendrées, converties en tension électrique sont traitées pour fournir une mesure de l'intensité de rayonnement infrarouge reçue par le détecteur. D'autres types de détecteurs d'image en infrarouge peuvent exister, reposant sur d'autres effets que l'effet pyroélectrique mais reposant aussi sur l'échauffement d'une couche. Ils sont concernés par l'invention, mais celle-ci sera décrite en détail uniquement à propos d'un détecteur pyroélectrique.

Le détecteur peut être ponctuel, ou peut comporter une colonne de points pyrosensibles pour faire une image infrarouge linéaire, ou encore un réseau matriciel de points pour faire une image bidimensionnelle; cette image peut être en particulier une image des répartitions de températures d'une scène observée.

Il existe des détecteurs hybrides utilisant deux substrats : un substrat qui assure la fonction pyroélectrique et un substrat qui assure les fonctions de traitement de signal. Les deux substrats sont collés face à face pour relier chaque point pyrosensible du premier substrat à un point du deuxième substrat.

Plus récemment, on a proposé aussi des détecteurs monolithiques qui sont constitués par un substrat de circuit intégré recouvert de matériau pyroélectrique déposable en couche mince (matériau polymère pyroélectrique). Le substrat porte les éléments de circuit nécessaires au traitement du signal pyroélectrique engendré.

Du fait que le matériau pyroélectrique produit des charges proportionnellement à son échauffement, et du fait que cet échauffement est une intégrale de l'intensité de rayonnement reçue, le détecteur pyroélectrique doit fonctionner de manière différentielle et non de manière absolue, surtout si on veut observer des scènes fixes. En effet, une intensité de rayonnement constante, représentant la luminance d'un point émettant un rayonnement infrarouge, va provoquer un échauffement progressif du matériau jusqu'à une valeur de saturation qui ne permettra pas de déduire l'intensité de rayonnement reçue. D'autre part, une mesure absolue de température dépendrait trop des variations de température ambiante du détecteur et ne serait pas suffisamment représentative des répartitions de températures de la scène observée.

C'est pourquoi on prévoit que le détecteur est alternativement éclairé, c'est-à-dire soumis au rayonnement infrarouge, puis masqué. La période de l'alternance éclairement - masquage doit être suffisante pour que le matériau pyroélectrique ait le temps de s'échauffer pendant l'éclairement et le temps de se refroidir pendant le masquage. La période est par exemple de 50 Hertz (10 millisecondes d'éclairement pour 10 millisecondes de masquage). Ce qu'on mesure alors n'est pas l'échauffement moyen mais l'amplitude de variation de l'échauffement au cours de l'alternance. Cette amplitude est en effet représentative de l'intensité reçue, beaucoup mieux que l'échauffement moyen qui dépend de trop d'autres paramètres.

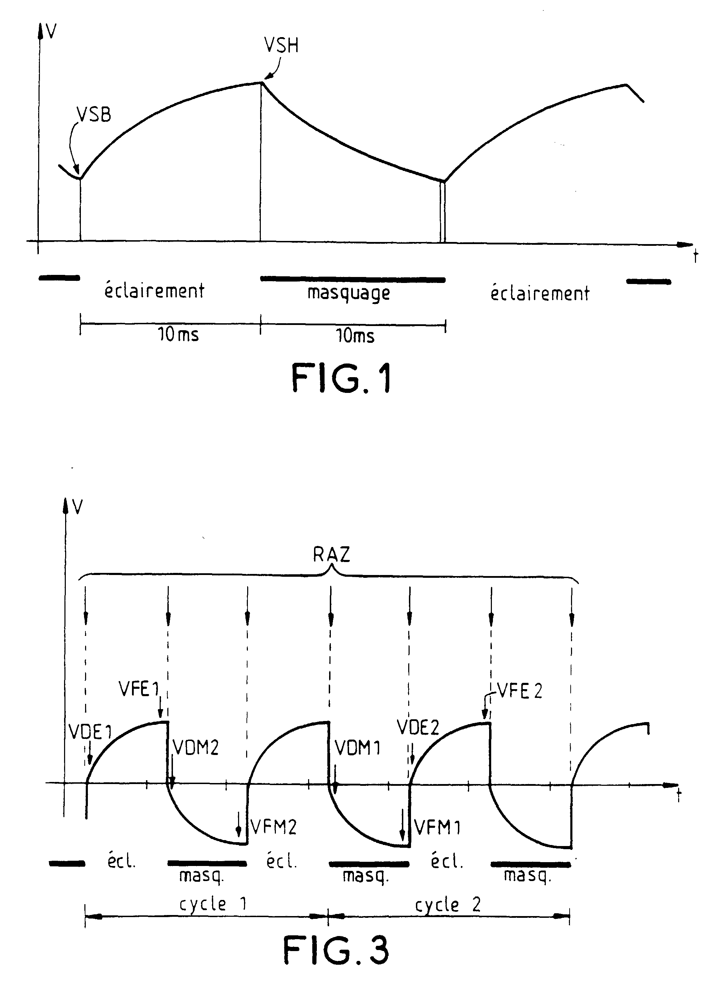

La courbe de la figure 1 représente l'évolution de la température de la couche pyroélectrique dans le cas où l'éclairement est ainsi alterné. La courbe est exprimée directement en tension en fonction du temps, la tension indiquée étant une tension fictive représentant un signal de sortie du détecteur, ce signal étant supposé proportionnel à l'échauffement du matériau pyroélectrique.

La température monte au début d'une phase d'éclairement et tend vers une valeur de saturation haute qui dépend non seulement de l'intensité infrarouge reçue mais aussi des pertes thermiques de la couche pyroélectrique. Puis elle redescend des le début de la phase de masquage, et tend également vers une valeur de saturation basse, avec une vitesse qui dépend également des pertes thermiques. La différence entre la tension à la fin de la phase d'éclairement et la tension à la fin de la phase de masquage est une bonne mesure de l'intensité de rayonnement infrarouge reçue. Voir par exemple le brevet US-A-4 072 863.

La détection consiste alors en gros à mesurer un échantillon de signal VSH à la fin d'une phase d'éclairement et un échantillon de signal VSB à la fin d'une phase de masquage, et à faire la différence VSH-VSB pour en déduire une valeur d'intensité infrarouge reçue.

Dans beaucoup de constructions de détecteurs d'images pyroélectriques on s'aperçoit que pour des raisons technologiques inévitables l'image électrique produite présente des défauts fixes (en anglais : "Fixed Pattern Noise" ou FPN, c'est-à-dire bruit dû aux défauts fixes). Ces défauts se traduisent par une image fixe indésirable qui se superpose à l'image résultant de l'éclairement de la scène qu'on veut observer. Par exemple, lorsque le détecteur comporte une amplification de signal électrique au niveau de chaque point d'image, les amplificateurs de chaque point peuvent avoir des tensions de décalage différentes pour les différents amplificateurs; c'est là une cause d'apparition de bruit de défauts fixes. Plus généralement, les imperfections de réalisation de toutes les parties de circuit qui ne sont pas communes mais qui sont associées individuellement à chaque point d'image, introduisent un bruit du type FPN.

La solution pour éliminer ce bruit de défauts fixes est habituellement la suivante : on moyenne plusieurs images dans l'obscurité, on met en mémoire point par point le résultat, puis, à chaque prise d'image, on soustrait point par point du signal mesuré en un point le signal d'obscurité mis en mémoire pour ce point. Si le bruit de défauts fixe varie dans le temps il faut recommencer l'opération de calibrage, et mettre une nouvelle image d'obscurité moyenne en mémoire. Ou bien il faut appliquer des coefficients correcteurs connus par modélisation en fonction de paramètres tels que la température, l'ouverture du diaphragme de l'objectif qui éclaire le détecteur, etc.

Ces circuits de calibration des défauts fixes sont de toutes façons coûteux en surface de circuit intégré.

Un but de l'invention est donc d'améliorer les solutions existantes pour l'élimination des défauts fixes dans les détecteurs d'image.

On propose selon l'invention un détecteur d'image thermique qui comporte un obturateur pour alternativement éclairer et masquer un matériau pyroélectrique, un moyen pour fournir cycliquement au moins un signal de mesure de point éclairé au cours d'une phase d'éclairement et au moins un signal de mesure de point masqué au cours d'une phase de masquage, et des moyens pour utiliser ces signaux de mesure pour établir, par différence entre les signaux de mesure fournis au cours d'un cycle, un signal de température représentant une mesure de température de point d'image pour ce cycle, le détecteur étant caractérisé en ce qu'il comporte

- des moyens pour commander l'obturateur pour établir périodiquement deux cycles successifs d'obturation comprenant chacun au moins une phase de masquage et une phase d'éclairement, l'ordre des phases de masquage et d'éclairement étant inversé entre deux cycles consécutifs,
- des moyens pour établir des signaux de mesure et des différences de signaux de mesure au cours de ces deux phases, dites phases actives, ceci d'une manière identique au cours de deux cycles consécutifs c'est-à-dire indépendamment de l'ordre des phases actives à l'intérieur de ces cycles,
- des moyens de synchronisation pour synchroniser l'établissement des signaux de mesure avec les phases des cycles d'obturation,
- et des moyens pour effectuer une soustraction entre d'une part les différences de signaux établies dans le premier cycle et d'autre part les différences de signaux correspondantes (SR'1) établies dans le deuxième cycle.

Le résultat de la soustraction est alors un signal représentatif de la température de point recherchée, et les bruits d'image fixes sont en grande partie éliminés par cette soustraction.

En résumé, on effectue la mesure par différence entre deux cycles successifs de masquage et d'éclairement, l'ordre des phases éclairement/masquage étant inversé entre les deux cycles, mais les mesures étant effectuées de manière identique dans les deux cycles.

De préférence on prévoit plus précisément que le premier cycle comporte d'abord une première phase active d'éclairement, puis une deuxième phase active de masquage, puis une troisième phase passive d'éclairement; et le deuxième cycle comporte d'abord une première phase active de masquage, puis une deuxième phase active d'éclairement, puis une troisième phase passive de masquage. Les phases actives sont celles qui donnent lieu à des mesures. Les phases actives sont en principe toutes de même durée. Les phases passives ont de préférence la même durée aussi.

Le détecteur peut alors comporter des moyens pour produire un premier signal différentiel représentant l'émission thermique d'un point au cours de la première phase du premier cycle, et un deuxième signal différentiel au cours de la deuxième phase du premier cycle, et pour produire de manière identique un troisième signal et un quatrième signal différentiels, respectivement au cours de la première et la deuxième phase du deuxième cycle, des moyens pour produire deux signaux de résultat qui sont respectivement la différence entre les premier et deuxième signaux différentiels et la différence entre les troisième et quatrième signaux différentiels, et des moyens pour produire un signal corrigé qui est la différence entre les deux signaux de résultat.

Les signaux différentiels pour chaque phase peuvent être établis à partir des différences entre des signaux de mesure produits respectivement en début et en fin de chaque phase active.

Le signal corrigé est une mesure de la température d'une capacité pyroélectrique, qui elle-même représente la température ou l'intensité d'émission infrarouge d'un point de la scène observée par le détecteur.

L'invention est applicable tout particulièrement, mais non exclusivement, aux détecteurs monolithiques dans lesquels le traitement de signal est réalisé au moins partiellement par des dispositifs à transfert de charges. Elle est particulièrement intéressante dans le cas des détecteurs dans lesquels les charges engendrées par effet pyroélectrique servent à contrôler le niveau d'une barrière de potentiel dans un dispositif à transfert de charges.

D'autres caractéristiques et avantages de l'invention apparaîtront à la lecture de la description détaillée qui suit et qui est faite en référence aux dessins annexés dans lesquels :

- la figure 1 déjà décrite représente un diagramme temporel expliquant l'allure des variations de température engendrées dans la couche pyroélectrique d'un détecteur à obturateur;
- la figure 2 représente la structure générale d'un détecteur pyroélectrique monolithique comprenant des dispositifs de traitement à transfert de charges;
- la figure 3 représente l'allure des variations de tension aux bornes de la capacité pyroélectrique dans un détecteur selon l'invention, avec remise à niveau périodique;
- la figure 4 représente l'architecture générale du détecteur en vue de la mise en oeuvre de l'invention;
- la figure 5 représente l'organisation du détecteur dans le cas d'un traitement par dispositifs à transfert de charges;

- la figure 6 schématise le fonctionnement du registre à décalage contenant les signaux de mesure instantanés.

L'invention sera décrite en détail à propos d'un détecteur pyroélectrique monolithique matriciel dans lequel le traitement de signal électrique est fait par dispositif à transfert de charges dans un substrat de silicium, mais l'invention est aussi bien applicable à d'autres types de détecteurs infrarouge, le seul critère indispensable étant qu'ils fonctionnent avec un obturateur pour alternativement élever et laisser redescendre la température de la couche sensible.

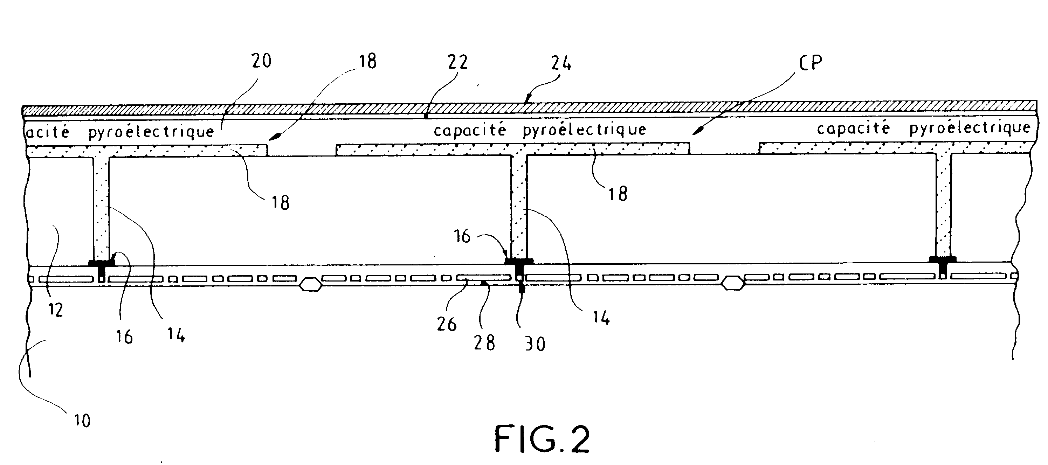

On se référera au brevet EP-A-0 491 596 du Demandeur pour comprendre en détail la construction et le fonctionnement d'un détecteur matriciel pyroélectrique monolithique. De manière générale, comme représenté à la figure 2, le détecteur comporte un substrat monolithique de silicium 10 dans lequel est formé un circuit intégré comprenant essentiellement des dispositifs à transfert de charge et les circuits de commande associés; les dispositifs à transfert de charge sont essentiellement des registres à décalage à transfert de charges en colonnes parallèles, avec des moyens pour injecter dans les cases de ce registre des charges en quantité liées à l'éclairement infrarouge qu'on cherche à mesurer, c'est-à-dire en général liées à la température de chaque point de l'image infrarouge observée. Les circuits de commande sont les circuits qui permettent d'une part l'injection de charges dans les registres, d'autre part les décalages périodiques de paquets de charges le long des registres, et enfin la lecture de ces charges, c'est-à-dire la conversion des paquets de charges en tensions électriques. Le substrat semiconducteur est recouvert d'un isolant électrique et thermique 12, par exemple en polyimide. Cet isolant est percé localement d'ouvertures que l'on remplit de matériau conducteur pour constituer des vias conducteurs 14 entre le dessus et le dessous de la couche d'isolant thermique. Au dessous de cette couche, les vias sont en contact chacun avec un conducteur respectif 16 du circuit intégré sous-jacent. Au dessus de la couche thermiquement isolante 12 sont déposées des électrodes rectangulaires individuelles 18, en réseau matriciel occupant la majeure partie de la surface du détecteur; chaque électrode 18 définit un point d'image à observer et elle est reliée à un via conducteur respectif 14, donc à un conducteur respectif 16 du substrat semiconducteur. La couche d'isolant thermique, ainsi revêtue d'électrodes reliées au circuit intégré, est recouverte d'une couche pyroélectrique 20, de préférence une couche de matériau polymère pyroélectrique. Enfin, une couche conductrice 22 est déposée sur la surface de la couche pyroélectrique, et une couche 24 absorbant les infrarouges dans la gamme de longueurs d'onde désirée (en général 8 à 14 micromètres) est déposée sur la couche conductrice 22. Les couches 22 et 24 peuvent être confondues.

Chaque électrode définit, avec la portion de couche pyroélectrique qui la recouvre, une capacité pyroélectrique CP ayant une armature inférieure individuelle 18 et une armature supérieure collective 22; cette capacité se charge en fonction de sa température et elle est reliée au circuit intégré sous-jacent en vue de créer dans le circuit intégré un signal électrique résultant de cette charge.

Dans l'exemple de réalisation représenté à la figure 2, le circuit intégré sous-jacent est un circuit à transfert de charges et on a symbolisé ce circuit par des électrodes juxtaposées 26, en général en silicium polycristallin; ces électrodes sont isolées, par une couche isolante mince 28, du substrat semiconducteur 10 dans lequel circulent des charges électriques. Le conducteur 16, relié au via conducteur 14 d'une capacité respective, peut être relié électriquement à une de ces électrodes, désignée par 30 sur la figure 2; cette électrode agit comme barrière de potentiel de hauteur variable pour les charges qui circulent dans le substrat, de sorte qu'on peut moduler des paquets de charges en fonction de la charge de chaque capacité pyroélectrique. Les charges modulées sont transférées dans des registres à décalage qui décalent ensuite ces charges parallèlement aux colonnes de capacités du réseau, c'est-à-dire dans une direction perpendiculaire au plan de la figure 2.

Dans d'autres réalisations à transfert de charges, les capacités pyroélectriques sont reliées directement au substrat pour une injection directe de charges pyroélectriques dans le semiconducteur. Dans d'autres réalisations n'utilisant pas de dispositifs à transfert de charges, les capacités pyroélectriques sont reliées à des circuits de mesure directe de la tension aux bornes de ces capacités.

Le détecteur ainsi réalisé sera en général placé derrière une optique qui forme à la surface du détecteur une image en infrarouge d'une scène observée. Une lentille au germanium convient pour les longueurs d'onde de l'ordre de 10 micromètres. Un obturateur actionné périodiquement est placé entre la scène à observer et le détecteur, en principe entre la lentille et le détecteur.

La couche absorbante reçoit le rayonnement infrarouge avec une intensité qui dépend localement de la scène observée. Elle s'échauffe donc localement selon un motif de températures qui correspond à l'image observée. Les capacités pyroélectriques s'échauffent en conséquence en fonction de cette image et définissent des points d'image reproduisant, avec une résolution définie par le nombre de capacités du réseau matriciel, le motif de températures de la couche absorbante.

Chaque capacité engendre des charges de surface en fonction de sa température moyenne propre, de sorte qu'à un instant donné, une capacité donnée possède une charge propre, qui représente l'influence, en ce point et à cet instant, du rayonnement infrarouge reçu par le détecteur.

Comme on l'a expliqué précédemment, la détection d'image infrarouge nécessite qu'on effectue une mesure différentielle entre la charge résultant de l'éclairement et la charge dans l'obscurité. L'obturateur placé devant le détecteur permet de faire cette mesure différentielle. L'obturateur peut être mécanique (lame opaque passant périodiquement devant le détecteur, miroir oscillant) ou électro-optique (cellule à cristal liquide).

On peut admettre que la charge pyroélectrique engendrée dans une capacité pyroélectrique est représentée par une tension, soit que cette tension soit la tension directement mesurée aux bornes de la capacité ou une tension déduite de celle-ci, soit que la tension soit le résultat de la conversion d'un paquet de charges pyroélectriques injectées par la capacité clans le substrat, soit enfin qu'elle soit le résultat de la conversion d'un paquet de charges modulé par la tension aux bornes de la capacité pyroélectrique. Dans tous les cas, l'allure des variations de la tension représentant la charge pyroélectrique est alors celle qu'on a expliquée en référence à la figure 1.

Le principe de la mesure pour un point pyrosensible consiste alors à déterminer la tension VSB en fin d'une phase de masquage, puis la tension VSH en fin de phase d'éclairement; on fait la différence VSH-VSB qui est un signal représentant l'éclairement infrarouge en ce point. On améliore la qualité de la mesure, et en particulier le rapport signal/bruit en effectuant deux mesures successives pour un même cycle de masquage et d'éclairement : on mesure la différence de tension engendrée entre le début et la fin de l'éclairement, puis la différence de tension engendrée entre le début de la phase de masquage et la fin de la phase de masquage, et on fait la différence entre ces deux mesures.

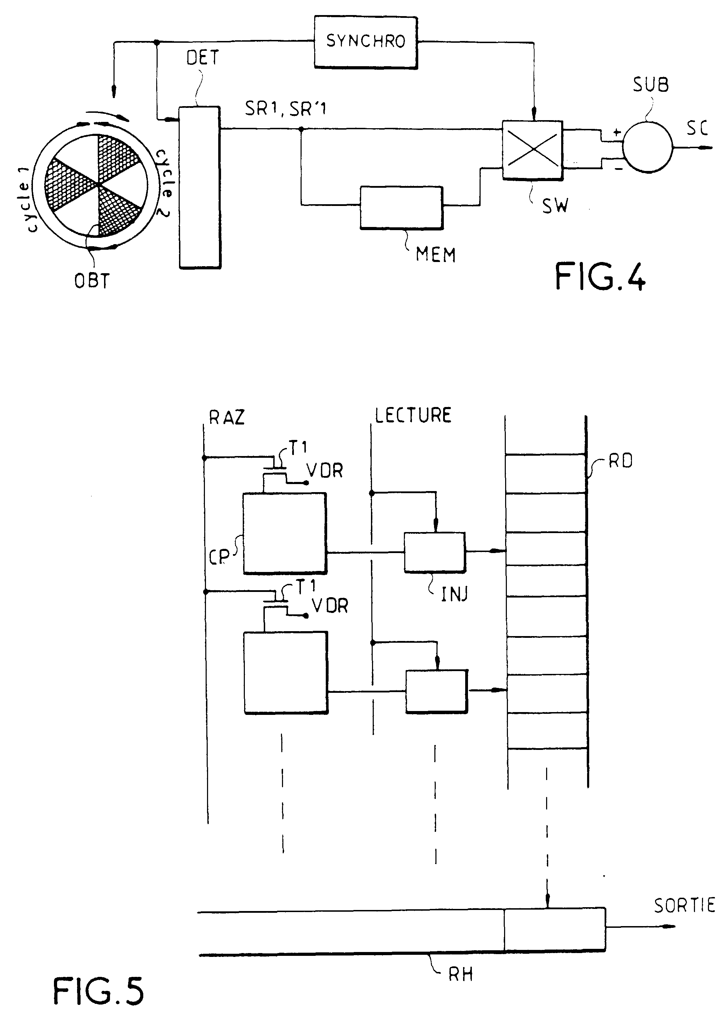

On notera que le principe reste le même dans le cas où on effectue une recalage de tension de l'armature inférieure de la capacité pyroélectrique à la fin de chaque phase (pour éviter les dérives dues par exemple à la génération thermique de porteurs de charge dans une diode reliée entre la capacité pyroélectrique et le substrat, diode servant à la polarisation initiale du matériau pyroélectrique : voir brevet précité EP-A-0 491 596). Dans ce cas, cas, l'évolution de tension aux bornes de la capacité pyroélectrique est plutôt celle de la figure 3. La mesure de température d'un point consiste encore à déterminer la différence de tension engendrée entre le début et la fin de la phase d'éclairement et de préférence aussi la différence engendrée entre le début et la fin de la phase de masquage, et on peut également faire la différence entre ces deux mesures. Par exemple on mesure la tension VDE1 en début de phase d'éclairement, juste après un recalage de tension (RAZ), puis la tension VFE1 en fin de phase d'éclairement; puis on effectue un recalage; on mesure la tension VDM2 en début de phase de masquage juste après ce recalage, et la tension VFM2 en fin de phase de masquage; on fait à nouveau une recalage de tension, etc. Le signal utile est obtenu par la différence VFE1-VDE1, ou VFM2-VDM2, ou mieux encore par (VFE1-VDE1)-(VFM2-VDM2).

Selon l'invention on propose d'améliorer la mesure d'une manière qui tend à éliminer un bruit d'image fixe indésirable. Ce bruit résulte de ce que la mesure est faite de manière identique pour tous les points d'image, mais à travers des circuits individuels qui ne sont pas rigoureusement identiques pour tous les points.

On propose selon l'invention d'effectuer la mesure par différence entre deux cycles successifs de masquage et d'éclairement, l'ordre des phases éclairement/ masquage étant inversé entre les deux cycles. Autrement dit, si dans un premier cycle, on effectue d'abord l'éclairement, puis le masquage, en effectuant les mesures nécessaires, alors, dans un deuxième cycle suivant immédiatement le premier, on effectuera d'abord le masquage puis l'éclairement, et on soustraira les résultats de mesure des deux cycles pour obtenir la mesure d'éclairement recherchée.

En pratique, pour obtenir les meilleurs résultats on procède encore par mesure différentielle avec recalage à chaque phase, c'est-à-dire que pour une phase donnée on mesure la différence entre le niveau de charges pyroélectriques en début de phase, juste après un recalage de tension et le niveau en fin de phase juste avant un recalage.

Si on se réfère à la figure 3, on a une succession de cycles de mesures qui se répètent identiquement, mais l'ordre des phases d'éclairement et de masquage est inversé à chaque changement de cycle. Au cours d'un premier cycle, on commence par une première phase qui est une phase d'éclairement, on continue par une deuxième phase qui est une phase de masquage, ces deux phases étant des phases actives en ce sens que des mesures sont effectuées pendant ces phases; et on termine par une troisième phase d'éclairement passive (sans mesure). Les trois phases ont de préférence toutes exactement la même durée (bien que ce ne soit pas obligatoire, la phase passive en particulier pouvant avoir une valeur très différente des autres). Le deuxième cycle comporte une première phase de masquage, une deuxième phase d'éclairement et une troisième phase de masquage; là encore, les phases sont de préférence identiques entre elles et identiques aux phases correspondantes du premier cycle.

On peut donc considérer qu'il y a une alternance de cycles qu'on peut appeler cycles "pairs" (éclairement d'abord, masquage ensuite) et de cycles "impairs" (masquage d'abord, éclairement ensuite).

On mesure le signal en début des phases actives, juste après recalage de tension et en fin de phase active, juste avant un nouveau recalage. L'intervalle de temps qui sépare la mesure et le recalage est très faible comparé à la durée de la phase : par exemple quelques microsecondes entre une mesure et un recalage pour une phase d'éclairement ou de masquage qui dure 3 millisecondes.

Pour les deux phases actives du premier cycle, on mesure :

- d'abord VDE1 et VFE1 en début et fin de première phase (éclairement),
- puis VDM2 et VFM2 en début et fin de deuxième phase.

Pour le deuxième cycle on mesure :

- d'abord VDM1 et VFM1 en début et fin de première phase (masquage),
- puis VDE2 et VFE2 en début et fin de deuxième phase.

Les circuits de calcul "ignorent" s'il s'agit d'un premier cycle ou d'un deuxième cycle, c'est-à-dire qu'ils traitent les signaux VDM1 et VFM1 comme si c'étaient des signaux VDE1 et VFE1, ou encore les signaux VDE2 et VFE2 comme si c'étaient des signaux VDM2 et VFM2. Toutefois, à un certain stade du traitement, une inversion de signe peut être nécessaire pour un cycle sur deux; un circuit de commutation synchronisé avec les cycles rétablira le signe approprié.

A partir des signaux de mesure ci-dessus, on établit les signaux différentiels suivants :

- premier signal différentiel VFE1-VDE1 représentant une variation de charge pyroélectrique en phase d'éclairement (cycle pair);
- deuxième signal différentiel VFM2-VDM2 représentant une variation de charge en phase de masquage (cycle pair);
- troisième signal différentiel VFM1-VDM1 (phase de masquage, cycle impair)
- et quatrième signal différentiel VFE2-VDE2 (phase d'éclairement, cycle impair).

Chacune de ces différences représente la température de scène observée pendant les cycles en un point d'image donné, ou encore l'intensité d'émission infrarouge en ce point et à cet instant.

On établit alors les signaux de résultat suivants :

- premier signal de résultat qui est la différence entre les premier et deuxième signaux différentiels :

$$SR1 = (VFE1-VDE1) - (VFM2-VDM2);$$

- deuxième signal de résultat qui est la différence entre les troisième et quatrième signaux différentiels :

$$SR'1 = (VFM1-VDM1) - (VFE2-VDE2).$$

Et on effectue selon l'invention la différence entre le deuxième et le premier signaux de résultat pour obtenir un signal corrigé :

$$SC = SR'1 - SR1$$

On comprendra qu'on pourrait aussi obtenir le signal corrigé SC en calculant

- d'abord la différence (VFE1-VDE1)-(VFM1-VDM1),
- puis la différence (VFM2-VDM2)-(VFE2-VDE2)
- et en soustrayant les deux résultats.

Après l'obtention du résultat corrigé SC, on passe à un couple de cycles pair/impair suivant. De préférence, pour ne pas réduire le débit d'obtention des signaux corrigés, le couple de cycles suivant utilise comme premier cycle le deuxième cycle du couple précédent : si on se réfère à la figure 3, on effectue les traitements en utilisant comme premier cycle le cycle impair dans lequel ont été mesurés les signaux VDM1, VFM1, VDE2, VFE2.

On comprendra que dans ce cas, si on utilise toujours les mêmes circuits de mesure et de traitement de signaux, indépendamment du fait que le couple de cycles commence par un cycle pair ou par un cycle impair, on va établir un signal corrigé dont le signe sera alterné à chaque cycle. Il faut donc un circuit d'inversion de signe qui est activé un cycle sur deux.

Explication de l'amélioration du bruit d'image fixe : pour chaque point d'image une erreur peut être introduite par les circuits de lecture et traitement qui sont exclusivement associés à ce point; ce bruit peut être exprimé sous forme de tension d'erreur systématique, qui apparaît donc à chaque mesure et qui est constante d'un cycle à l'autre pour un point d'image donné. L'erreur est par exemple vd1, vf1, vd2, vf2 pour les quatre mesures faites au cours d'un cycle pour un point donné. Cette erreur se répète à chaque cycle.

Le signal corrigé est :

$$SC = SR'1-SR1,$$

avec :

$$SR1 = (VFE1+vf1-VDE1-vd1)-(VFM2+vf2-VDM2-vd2)$$

$$SR'1 = (VFM1+vf1-VDM1-vd1)-(VFE2+vf2-VDE2-vd2).$$

Les erreurs systématiques s'éliminent dans la soustraction. De plus, on a augmenté le niveau du signal utilisé : SC a une valeur absolue qui est deux fois plus élevée que SR1 ou SR'1 et qui est quatre fois plus élevée que les signaux différentiels tels que VDE1-VFE1. Le bruit n'est cependant pas augmenté dans la même proportion (l'augmentation de bruit est plutôt la racine carrée de l'augmentation du niveau de signal, en particulier dans les dispositifs à transfert de charge). On aboutit donc à une amélioration du rapport signal/bruit, qui est un avantage supplémentaire de l'invention.

Si le bruit d'image fixe dérive dans le temps (par suite de variations de température ambiante, etc.), cette dérive est prise en compte et éliminée automatiquement.

Selon le type de traitement de signaux qui est utilisé, on peut réaliser l'invention de manière différente.

La solution la plus simple consiste simplement à prendre les signaux de sortie SR1, SR'1 obtenus à chaque cycle exactement comme on les obtenait dans la technique antérieure où il n'y avait pas alternance de l'ordre d'éclairement. On mémorise SR1 jusqu'à l'obtention de SR'1, et quand on a SR'1 on fait la différence SR1-SR'1, en même temps qu'on mémorise SR'1, et ainsi de suite.

La figure 4 représente la construction correspondante. Le détecteur DET fournit périodiquement les signaux différentiels SR1 et SR'1; ces signaux sont par exemple issus d'un convertisseur analogique-numérique faisant partie du détecteur. Le signal numérisé est appliqué d'une part à un soustracteur SUB et d'autre part à une mémoire MEM. Le soustracteur reçoit le signal numérisé et la sortie de la mémoire contenant le signal SR1 ou SR'1 mémorisé au cycle précédent. Les entrées du soustracteur (ou la sortie) sont inversées à chaque cycle dans un commutateur SW pour tenir compte de ce qui a été dit plus haut sur le signe alterné de la différence entre les signaux de résultat SR1 et SR'1. L'inverseur est synchronisé avec le fonctionnement de l'obturateur, l'ensemble des circuits de traitement de signaux étant d'ailleurs également synchronisés avec l'obturateur. Une forme possible d'obturateur mécanique à trois secteurs opaques séparés par trois secteurs transparents est symbolisée à la figure 4; elle correspond à deux cycles consécutifs pour un tour de l'obturateur; il faut comprendre cependant que l'obturateur pourrait n'avoir qu'une seule zone opaque, et c'est l'électronique du circuit intégré qui définit alors dans quel cycle on se trouve. C'est ainsi que cela est fait de toutes façons si l'obturateur est électrooptique et non mécanique.

On pourrait bien sûr concevoir d'autres architectures dans lesquelles le calcul de SC est effectué par soustraction à d'autres stades que le stade final, pourvu que la soustraction ne soit pas faite par des circuits individuels distincts pour chaque point d'image.

Par exemple, dans des circuits à transferts de charge, les différences peuvent être établies par soustraction de paquets de charge avant la conversion de ces paquets de charge en tensions électriques analogiques. La soustraction pourrait être faite aussi après la conversion en tensions analogiques mais avant numérisation.

Dans le cas d'un détecteur monolithique associé à des circuits à transfert de charges, on utilisera de préférence le fait que les quatre mesures correspondant à un cycle peuvent être stockées dans quatre cases adjacentes d'un registre à décalage. Dans ce cas, la troisième phase de chaque cycle est mise à profit (puisqu'on ne fait pas de mesures) pour vider la totalité des registres à décalage donnant les mesures effectuées au cours de ce cycle pour tous les points d'image. La durée de la troisième phase peut être ajustée en fonction de la durée nécessaire pour la lecture. Il n'est pas souhaitable que la troisième phase soit de durée plus courte que celle des phases actives. Il est préférable si c'est possible qu'elle soit de même durée, pour la régularité des cycles d'échauffement et refroidissement sur la couche pyroélectrique.

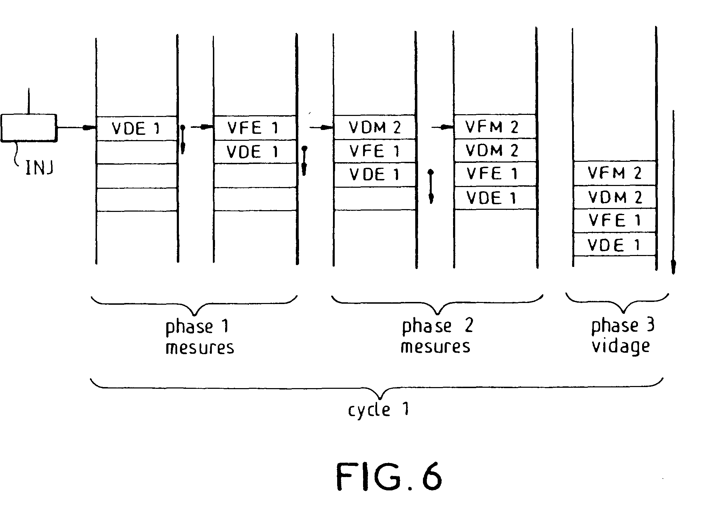

La figure 5 représente schématiquement l'organisation du registre à décalage RD associé à une colonne de capacités pyroélectriques CP. Le nombre de cases du registre est quatre fois plus élevé que le nombre de capacités. Les armatures inférieures des capacités sont remises à niveau régulièrement par les transistors T1 reliés à une source de tension de remise à niveau VDR. Un injecteur de charges INJ, contrôlé par le potentiel de la capacité pyroélectrique, est activé simultanément pour toutes les capacités. L'injecteur injecte dans le registre des charges en quantité proportionnelle aux signaux de mesure VDE1, VFE1, etc. Le registre est décalé en synchronisme avec les différentes mesures donc avec les différents instants d'injection .

Ainsi, quatre opérations d'injection se succèdent pour chaque cycle : injection d'un signal représentant VDE1, décalage d'une case du registre; injection d'un signal correspondant à VFE1; remise à niveau et décalage d'une case du registre; injection de VDM2; décalage d'une case; injection de VFM2; remise à niveau; puis vidage progressif du registre en colonne pendant la troisième phase du cycle (classiquement la dernière case de tous les registres en colonne se vide dans une case d'un registre horizontal RH; le registre horizontal est vidé très rapidement entre deux décalages des registres en colonne). Pour le deuxième cycle, le déroulement est le même, les signaux injectés étant successivement VDM1, VFM1, VDE2, VFE2.

La figure 6 représente l'évolution successive des contenus des cases du registre pendant un cycle pair : remplissage de deux cases par VDE1 puis VFE1 pendant la première phase, puis de deux autres par VDM2 puis VFM2 pendant la deuxième phase, et enfin vidage du registre pendant la troisième phase. Seules les quatre cases associées à une capacité pyroélectrique sont représentées; les autres cases correspondent aux autres capacités de la même colonne, c'est-à-dire aux autres points d'image de la même colonne.

## Revendications

1. Détecteur d'image thermique qui comporte un obturateur (OBT) pour alternativement éclairer et masquer un matériau pyroélectrique, un moyen pour fournir cycliquement au moins un signal de mesure de point éclairé (VDE1, VFE1) au cours d'une phase d'éclairement et au moins un signal de mesure de point masqué (VDM2, VFM2) au cours d'une phase de masquage, ef des moyens pour utiliser ces signaux de mesure pour établir, par différence entre les signaux de mesure fournis au cours d'un cycle, un signal de température (SR1, SR'1) représentant une mesure de température de point d'image pour ce cycle, le détecteur étant caractérisé en ce qu'il comporte

- des moyens pour commander l'obturateur pour établir périodiquement deux cycles successifs d'obturation comprenant chacun au moins une phase de masquage et une phase d'éclairement, l'ordre des phases de masquage et d'éclairement étant inversé entre deux cycles consécutifs,
- des moyens pour établir des signaux de mesure et des différences de signaux de mesure au cours de ces deux phases, dites phases actives, ceci d'une manière identique au cours de deux cycles consécutifs c'est-à-dire indépendamment de l'ordre des phases actives à l'intérieur de ces cycles,
- des moyens de synchronisation pour synchroniser l'établissement des signaux de mesure avec les phases des cycles d'obturation,
- et des moyens (SUB) pour effectuer une soustraction entre d'une part les différences de signaux (SR1) établies dans le premier cycle et d'autre part les différences de signaux correspondantes (SR'1) établies dans le deuxième cycle.

2. Détecteur selon la revendication 1, caractérisé en ce que le premier cycle comporte d'abord une première phase active d'éclairement, puis une deuxième phase active de masquage, puis une troisième phase passive d'éclairement; et le deuxième cycle comporte d'abord une première phase active de masquage, puis une deuxième phase active d'éclairement, puis une troisième phase passive de masquage, des signaux de mesure étant établis pendant les phases actives seulement.

3. Détecteur selon la revendication 2, caractérisé en ce que les durées de toutes les phases actives sont identiques.

4. Détecteur selon la revendication 3, caractérisé en ce que les durées des phases passives sont au moins aussi longues que celles des phases actives.

5. Détecteur selon la revendication 3, caractérisé en ce que les durées des phases passives sont identiques aux durées des phases actives.

6. Détecteur selon l'une des revendications 2 à 5, caractérisé en ce qu'il comporte des moyens pour produire un premier signal différentiel (VFE1-VDE1) représentant l'émission thermique d'un point au cours de la première phase du premier cycle, un deuxième signal différentiel (VFM2-VDM2) au cours de la deuxième phase du premier cycle, et pour produire de manière identique un troisième signal (VFM1-VDM1) et un quatrième signal (VFE2-VDE2) différentiels, respectivement au cours de la première et la deuxième phase du deuxième cycle, des moyens pour produire deux signaux de résultat (SR1, SR'1) qui sont respectivement la différence entre les premier et deuxième signaux différentiels et la différence entre les troisième et quatrième signaux différentiels, et des moyens pour produire un signal corrigé (SC) qui est la différence entre les deux signaux de résultat.

7. Détecteur thermique selon la revendication 5, caractérisé en ce qu'il comporte des moyens pour établir un signal de mesure (VDE1, VDM1, VDE2, VDM2) en début de chaque phase active et un signal (VFE1, VFM1, VFE2, VFM2) en fin de chaque phase active, les signaux différentiels étant la différence entre le signal de mesure en fin de phase et le signal de mesure en début de la même phase.

8. Détecteur selon l'une des revendications 1 à 7, caractérisé en ce qu'il comporte un commutateur (SW) pour inverser à chaque nouveau cycle le signe du résultat de la soustraction entre les signaux du premier cycle et du deuxième cycle.

9. Détecteur selon l'une des revendications 1 à 8, caractérisé en ce qu'il comporte une mémoire (MEM) pour stocker un signal établi au cours d'un cycle précédant un cycle courant et un soustracteur (SUB) recevant le signal établi au cours du cycle courant et le signal mémorisé.

10. Détecteur d'image thermique selon l'une des revendications précédentes, caractérisé en ce que le détecteur est un détecteur pyroélectrique comportant un réseau de capacités pyroélectriques, la charge de chaque capacité étant fonction de la température de cette capacité.

11. Détecteur selon la revendication 10, caractérisé en ce que les capacités sont reliées à un dispositif à transfert de charges comportant un registre à décalage associé à une colonne de capacités pyroélectriques, chaque capacité étant associée à quatre cases consécutives du registre, avec des moyens pour injecter dans une première de ces quatre cases une charge fonction de la charge de la capacité pyroélectrique, et des moyens pour faire décaler le registre d'une part après le début et d'autre part après la fin de chacune des deux première phases de chaque cycle.

12. Détecteur selon l'une des revendications 10 et 11, caractérisé en ce que la capacité pyroélectrique est reliée à une électrode de dispositif à transfert de charge, pour établir une barrière de potentiel de niveau variable en fonction de la température de la capacité.

**Patentansprüche**

1. Wärmebilddetektor, der einen Verschluß (OBT) zum abwechselnden Beleuchten und Abschatten eines pyroelektrischen Materials, ein Mittel zum zyklischen Liefern wenigstens eines Meßsignals (VDE1, VFE1) eines beleuchteten Punkts während einer Beleuchtungsphase und wenigstens eines Meßsignals (VDM2, VFM2) eines abgeschatteten Punkts während einer Abschattungsphase sowie Mittel enthält, die diese Meßsignale verwenden, um anhand der Differenz zwischen den während eines Zyklus gelieferten Meßsignalen ein Temperatursignal (SR1, SR'1) zu erzeugen, das einen Meßwert der Bildpunkttemperatur für diesen Zyklus repräsentiert, wobei der Detektor dadurch gekennzeichnet ist, daß er enthält:

- Mittel zum Steuern des Verschlusses, um periodisch zwei aufeinanderfolgende Verschlußzyklen zu erzeugen, wovon jeder wenigstens eine Abschattungsphase und eine Beleuchtungsphase enthält, wobei die Reihenfolge der Abschattungs- und Beleuchtungsphasen in zwei aufeinanderfolgenden Zyklen umgekehrt ist,
- Mittel zum Erzeugen der Meßsignale und der Meßsignaldifferenzen während dieser zwei sogenannten aktiven Phasen in völlig gleicher Weise während zweier aufeinanderfolgender Zyklen, d. h. unabhängig von der Reihenfolge der aktiven Phasen innerhalb dieser Zyklen,
- Synchronisationsmittel zum Synchronisieren der Erzeugung der Meßsignale mit den Phasen der Verschlußzyklen,
- und Mittel (SUB) zum Ausführen einer Subtraktion zwischen einerseits den Signaldifferenzen (SR1), die im ersten Zyklus erzeugt werden, und andererseits den entsprechenden Signaldifferenzen (SR'1), die im zweiten Zyklus erzeugt werden.

2. Detektor nach Anspruch 1, dadurch gekennzeichnet, daß der erste Zyklus zunächst eine erste aktive Beleuchtungsphase, dann eine zweite aktive Abschattungsphase und dann eine dritte passive Beleuchtungsphase enthält; und der zweite Zyklus zunächst eine erste aktive Abschattungsphase, dann eine zweite aktive Beleuchtungsphase und dann eine dritte passive Abschattungsphase enthält, wobei die Meßsignale nur während der aktiven Phasen erzeugt werden.

3. Detektor nach Anspruch 2, dadurch gekennzeichnet, daß die Dauern sämtlicher aktiver Phasen gleich sind.

4. Detektor nach Anspruch 3, dadurch gekennzeichnet, daß die Dauern der passiven Phasen wenigstens ebensolang wie jene der aktiven Phasen sind.

5. Detektor nach Anspruch 3, dadurch gekennzeichnet, daß die Dauern der passiven Phasen gleich den Dauern der aktiven Phasen sind.

6. Detektor nach den Ansprüchen 2 bis 5, dadurch gekennzeichnet, daß er versehen ist mit Mitteln zum Erzeugen eines ersten differentiellen Signals (VFE1-VDE1), das die Wärmeemission eines Punkts während der ersten Phase des ersten Zyklus repräsentiert, und eines zweiten differentiellen Signals (VFM2-VDM2) während der zweiten Phase des ersten Zyklus und zum Erzeugen in gleicher Weise eines dritten differentiellen Signals (VFM1-VDM1) und eines vierten differentiellen Signals (VFE2-VDE2) während der ersten bzw. der zweiten Phase des zweiten Zyklus, mit Mitteln zum Erzeugen zweier Ergebnissignale (SR1, SR'1), die die Differenz zwischen dem ersten und dem zweiten differentiellen Signal bzw. die Differenz zwischen dem dritten und dem vierten differentiellen Signal sind, und Mitteln zum Erzeugen eines korrigierten Signals (SC), das die Differenz zwischen den beiden Ergebnissignalen ist.

7. Wärmedetektor nach Anspruch 5, dadurch gekennzeichnet, daß er versehen ist mit Mitteln zum Erzeugen eines Meßsignals (VDE1, VDM1, VDE2, VDM2) am Beginn jeder aktiven Phase und eines Signals (VFE1, VFM1, VFE2, VFM2) am Ende jeder aktiven Phase, wobei die differentiellen Signale die Differenz zwischen dem Meßsignal am Ende der Phase und dem Meßsignal am Anfang derselben Phase sind.

8. Detektor nach einem der Ansprüche 1 bis 7, dadurch gekennzeichnet, daß er einen Umschalter (SW) enthält, um in jedem neuen Zyklus das Vorzeichen des Ergebnisses der Subtraktion zwischen den Signalen des ersten Zyklus und des zweiten Zyklus umzukehren.

9. Detektor nach einem der Ansprüche 1 bis 8, dadurch gekennzeichnet, daß er versehen ist mit einem Speicher (MEM) zum Speichern eines Signals, das während eines einem momentanen Zyklus vorhergehenden Zyklus erzeugt wird, und einem Subtrahierer (SUB), der das während des momentanen Zyklus erzeugte Signal und das gespeicherte Signal empfängt.

10. Wärmebilddetektor nach einem der vorangehenden Ansprüche, dadurch gekennzeichnet, daß der Detektor ein pyroelektrischer Detektor ist, der ein Gitter von pyroelektrischen Kapazitäten enthält, wobei die Ladung jeder Kapazität von der Temperatur dieser Kapazität abhängt.

11. Detektor nach Anspruch 10, dadurch gekennzeichnet, daß die Kapazitäten mit einer Ladungsübertragungsvorrichtung verbunden sind, die ein einer Spalte der pyroelektrischen Kapazitäten zugeordnetes Schieberegister enthält, wobei jeder Kapazität vier aufeinanderfolgende Fächer des Registers zugeordnet sind, mit Mitteln zum Einleiten einer von der Ladung der pyroelektrischen Kapazität abhängenden Ladung in ein erstes dieser vier Fächer und Mitteln zum Verschieben des Registers einerseits nach dem Beginn und andererseits nach dem Ende jeder der zwei ersten Phasen jedes Zyklus.

12. Detektor nach einem der Ansprüche 10 und 11, dadurch gekennzeichnet, daß die pyroelektrische Kapazität mit einer Elektrode der Ladungsübertragungsvorrichtung verbunden ist, um eine Potentialsperre mit in Abhängigkeit von der Temperatur der Kapazität veränderlicher Höhe zu schaffen.

## Claims

1. Thermal image detector which has a shutter (OBT) for alternately illuminating and masking a pyroelectric material, a means for cyclically delivering at least one illuminated-point measurement signal (VDE1, VFE1) during an illumination phase, and at least one masked-point measurement signal (VDM2, VFM2) during a masking phase, and means for using these measurement signals in order, by taking the difference between the measurement signals delivered during a cycle, to establish a temperature signal (SR1, SR'1) representing a pixel temperature measurement for this cycle, the detector being characterized in that it includes

- means for driving the shutter in order periodically to establish two successive shutter cycles, each comprising at least one masking phase and one illumination phase, the order of the masking and illumination phases being reversed between two consecutive cycles,
- means for establishing measurement signals and differences between measurement signals during these two phases, which are referred to as the active phases, this being done in exactly the same way during two successive cycles, that is to say independently of the order of the active phases within these cycles,

- synchronization means for synchronizing the establishment of the measurement signals with the phases of the shutter cycles,
- and means (SUB) for performing a subtraction between, on the one hand, the signal differences (SR1) established in the first cycle and, on the other hand, the corresponding signal differences (SR'1) established in the second cycle.

2. Detector according to Claim 1, characterized in that the first cycle firstly includes a first active illumination phase, then a second active masking phase, then a third passive illumination phase; and the second cycle firstly includes a first active masking phase, then a second active illumination phase, then a third passive masking phase, measurement signals being established only during the active phases.

3. Detector according to Claim 2, characterized in that the durations of all the active phases are identical.

4. Detector according to Claim 3, characterized in that the durations of the passive phases are at least as long as those of the active phases.

5. Detector according to Claim 3, characterized in that the durations of the passive phases are identical to the durations of the active phases.

6. Detector according to one of Claims 2 to 5, characterized in that it includes means for producing a first differential signal (VFE1-VDE1) representing the thermal emission of a point during the first phase of the first cycle, a second differential signal (VFM2-VDM2) during the second phase of the first cycle, and for producing, in exactly the same way, a third signal (VFM1-VDM1) and a fourth signal (VFE2-VDE2), these being differential signals, respectively during the first and second phases of the second cycle, means for producing two result signals (SR1, SR'1) which are respectively the difference between the first and second differential signals and the difference between the third and fourth differential signals, and means for producing a corrected signal (SC) which is the difference between the two result signals.

7. Thermal detector according to Claim 5, characterized in that it includes means for establishing a measurement signal (VDE1, VDM1, VDE2, VDM2) at the start of each active phase and a signal (VFE1, VFM1, VFE2, VFM2) at the end of each active phase, the differential signals being the difference between the measurement signal at the end of a phase and the measurement signal at the start of the same phase.

8. Detector according to one of Claims 1 to 7, characterized in that it includes a switch (SW) for reversing, at each new cycle, the sign of the result of the subtraction between the signals of the first cycle and of the second cycle.

9. Detector according to one of Claims 1 to 8, characterized in that it includes a memory (MEM) for storing a signal established during a cycle preceding a current cycle, and a subtractor (SUB) receiving the signal established during the current cycle and the stored signal.

10. Thermal image detector according to one of the preceding claims, characterized in that the detector is a pyroelectric detector including an array of pyroelectric capacitors, the charge of each capacitor being dependent on the temperature of this capacitor.

11. Detector according to Claim 10, characterized in that the capacitors are connected to a charge-coupled device having a shift register associated with a column of pyroelectric capacitors, each capacitor being associated with four consecutive locations in the register, and also means for injecting a charge which depends on the charge of the pyroelectric capacitor into a first of these four locations, as well as means for shifting the register, on the one hand, after the start, and on the other hand after the end, of each of the two first phases of each cycle.

12. Detector according to one of Claims 10 and 11, characterized in that the pyroelectric capacitor is connected to one electrode of the charge-coupled device in order to establish a potential barrier whose level can vary depending on the temperature of the capacitor.

FIG.1

FIG.3

FIG.2

acité pyroélectrique    capacité pyroélectrique    capacité pyroélectrique

20  18  22  24  CP

18
18
16
12
16  14
26  14
28  30
10

EP 0 604 282 B1

FIG.4

FIG.5

INJ

| VDE 1 | | VFE 1 | | VDM 2 | | VFM 2 | | |
| VDE 1 | | VFE 1 | | VDM 2 | | VFM 2 |
| | | VDE 1 | | VFE 1 | | VDM 2 |
| | | | | VDE 1 | | VFE 1 |
| | | | | | | VDE 1 |

phase 1
mesures

phase 2
mesures

phase 3
vidage

cycle 1

# FIG. 6